# EUROPÄISCHE PATENTSCHRIFT

(11) **EP 1 175 758 B1**
(45) Veröffentlichungstag und Bekanntmachung des Hinweises auf die Patenterteilung: **01.06.2005**
(21) Anmeldenummer: 00906357.9
(22) Anmeldetag: 19.02.2000
(51) Int. Cl.: H04L 12/64, H04L 12/42

(54) **LOKALES NETZWERK UND VERFAHREN ZUR WIEDERGABE VON AUDIO- UND VIDEODATEN**
LOCAL NETWORK AND METHOD FOR REPRODUCING AUDIO AND VIDEO DATA
RESEAU LOCAL ET PROCEDE POUR LA REPRODUCTION DE DONNEES AUDIO ET VIDEO

(30) Priorität: 10.05.1999 DE 19921626
(43) Veröffentlichungstag der Anmeldung: 30.01.2002
(73) Patentinhaber: XSYS Interactive Research GmbH, 78050 Villingen-Schwenningen (DE)
(72) Erfinder: STIEGLER, Andreas, D-76275 Ettlingen (DE); TEICHNER, Detlef, D-78126 Königsfeld (DE); MAIER, Michael, D-78054 Villingen-Schwenningen (DE)
(74) Vertreter: Patentanwälte Westphal, Mussgnug & Partner
(86) Internationale Anmeldenummer: PCT/EP2000/001375
(87) Internationale Veröffentlichungsnummer: WO 2000/069130

(56) Entgegenhaltungen:
- WO-A-98/36533
- US-A- 5 014 267
- US-A- 5 867 484

## Beschreibung

Die Beschreibung betrifft ein lokales Netzwerk mit mehreren Teilnehmern, die miteinander mittels einer optischen Datenleitung zur Übertragung von Audio- und/oder Videodaten sowie von Steuerdaten zu einem ringförmigen Netzwerk verbunden sind sowie ein Verfahren zur Wiedergabe von Audio- und Videodaten in diesem lokalen Netzwerk.

Ein derartiges Netzwerk ist aus US-A-5 867 484 bekannt.

Es sind Gerätekombinationen bekannt, die aus zwei Geräten bestehen, einer Datenquelle für komprimierte Audio- und Videodaten, das kann beispielsweise ein DVD-Player sein und eine Datensenke, das kann ein Fernseher sein, der die ihm zugeführten Audio- und Videodaten mittels seiner Lautsprecher und seiner Bildröhre zur Wiedergabe bringt. Dabei ist der DVD-Player und der Fernseher über eine Datenleitung miteinander verbunden. Bei dieser Kombination werden die auf der Digital-Versatil-Disc (DVD) gespeicherten, komprimierten Daten, das sind sowohl Audio- als auch Videodaten, welche unter anderem nach dem MPEG2-Standard kodiert sind, ausgelesen und durch einen entsprechenden MPEG2-Decoder im DVD-Player decodiert und damit dekomprimiert. Anschließend werden die dekomprimierten Daten über die Datenleitung zu dem Fernsehgerät übertragen, welches diese dekomprimierten Daten beispielsweise als FBAS-Signal entsprechend den durch den TV-Tuner empfangenen Videodaten mittels der Bildröhre wiedergibt. Auf entsprechende Weise werden die dekomprimierten Audiodaten in dem TV-Empfänger, einem Verstärker und den daran angeschlossenen Lautsprechern zur Wiedergabe zugeführt. Dieses System zeigt eine hohe über die Datenleitung zu übertragende Datenrate, weshalb besonders hohe Anforderungen an die Datenleitung respektive den Bus, der das Übertragungsformat der zu übertragenden dekomprimierten Daten festlegt, geben sind. Über diese Datenleitung lassen sich gleichzeitig nur wenige Audio- und Videosignale übertragen.

Es sind lokale Netzwerke mit mehreren Teilnehmern, die miteinander mittels einer optischen Datenleitung zur Übertragung von Audio- und/oder Videodaten sowie Steuerdaten zu einem ringförmigen Netzwerk verbunden sind, beispielsweise aus der neuen EP 519 111 B1 bekannt. Dieses lokale Netzwerk zeigt mehrere Teilnehmer, von denen ein Teil Audio- oder Videodaten und Steuerdaten generiert (Datenquellen) und diese in das ringförmige Netzwerk einspeist, wobei ein anderer Teil der Teilnehmer des Netzwerkes die für sie bestimmten Daten aufnimmt (Datensenken) und diese Daten verarbeitet und zur Wiedergabe bringt. Als Datenquellen kommen Teilnehmer in Frage, die ihre Daten als unkomprimierte Daten oder als komprimierte Daten an die Datenleitung des Netwerks geben. Dementsprechend sind die Datensenken, die komprimierte Daten empfangen, mit einem Bit-Stream-Decoder ausgestattet, welcher die komprimierten Daten decodiert bzw. dekomprimiert und im Folgenden diese dekomprimierten Daten zur Wiedergabe bringt. Der zuvor beschriebene DVD-Player und der Fernseher können Teilnehmer dieses lokalen Netzwerkes sein, wobei diese Gerätekombination, die zuvor beschriebenen Nachteile aufweist.

Der Erfindung liegt die Aufgabe zugrunde, ein lokales Netzwerk, insbesondere für automotive Anwendungen zu schaffen, welches die maximale Übertragungskapazität des Netwerkes möglichst gut ausnutzt und dabei möglichst kostengünstig ist.

Diese Aufgabe wird erfindungsgemäß durch ein lokales Netzwerk mit dem Merkmalen des Anspruchs 1 sowie durch ein Verfahren zur Übertragung von Audio- und Videodaten in einem lokalen Netzwerk mit den Merkmalen der Ansprüche 9 und 10 gelöst.

Vorteilhafte Weiterbildungen ergeben sich aus den Unteransprüchen.

Das erfindungsgemäße lokale Netzwerk, welches ideal geeignet ist, in einem Automobil realisiert zu werden, zeigt eine gemeinsame Übertragung von Audio- und Videodaten in komprimierter Form über die Datenleitung von der Datenquelle aus zu einer Datensenke. In dieser Datensenke werden die komprimierten Audio- und Videodaten entweder zuerst einem Bit-Stream-Decoder zur gemeinsamen Decodierung (Dekomprimierung) der Audio- und Videodaten und anschließend einer Trennstufe zur Trennung der dekomprimierten Audio- von den dekomprimieren Videodaten zugeführt, wobei wenigstens eine Datenart über die optische Datenleitung zu einem anderen Teilnehmer des Netzwerks und dort zur Wiedergabe gebracht wird, oder die gemeinsam übertragenen komprimierten Audio- und Videodaten werden zuerst einer Trennstufe zur Trennung der komprimierten Audiodaten von den komprimierten Videodaten zugeführt wird und diese getrennten Datenarten anschließend jeweils einem Bit-Stream-Decoder und anschließend einer Ausgabeeinheit zugeführt, wobei wenigstens eine Art der dekomprimierten Datenarten über die optische Datenleitung der Ausgabeeinheit zugeführt wird. Dabei kann die Trennstufe mit dem Bit-Stream-Decoder zu einer einzigen Einheit zusammengefaßt sein. Durch diese Ausbildung des lokalen Netzwerkes ist es möglich, bei den verschiedenen Datenquellen auf die bisher enthaltenen Decoder zu verzichten, beispielsweise auf den Bit-Stream-Decoder in einem DVD-Player. In einem DVD-Player ist der Bit-Stream-Decoder für die Videodaten als MPEG-2-Decoder und für die Audiodaten als MPEG2 oder Dolby-Digital-Decoder ausgebildet. Sollen in einem Netzwerk beispielsweise mehrere derartige Datenquellen angeordnet werden, so ist es nun erfindunsgemäß möglich auf diese Vielzahl von Bit-Stream-Decoder in den einzelnen Datenquellen zur gemeinsamen Übertragung von Audio- und Videodaten zu verzichten, was die Kosten für das Netwerk mit seinen Teilnehmern senkt.

Allein bei der oder den betreffenden Datensenken für komprimierte Daten ist ein einziger Bit-Stream-Decoder für die Dekomprimierung der entsprechenden Videodaten und Audiodaten vorgesehen, so daß regelmäßig eine Reduktion der Decoderkomponenten in den Datensenken gegeben ist.

Durch die gemeinsame Übertragung der komprimierten Audio- und Videodaten von der Datenquelle zu der oder den Datensenken ist eine verbesserte Ausnutzung der maximalen Datenübertragungskapazität des Netzwerkes gegeben. Werden die gemeinsam übertragenen Audio- und Videodaten vor ihrer Trennung durch die Trennstufe zuerst mittels eines Bit-Stream-Decoders vollständig decodiert ist es möglich, als Ausgabeeinheiten bzw. als weitere Datensenken standartisierte Geräte zur Wiedergabe der Audiodaten bwz. der Videodaten zu verwenden. Typische Geräte zur Wiedergabe der Audiodaten sind Audioverstärker mit daran angeschlossenen Lautsprechern bzw. zur Wiedergabe von Videodaten typischerweise Bildschirme oder Projektoren. Diese Ausbildung des lokalen Netzwerkes kann die Wiedergabe der dekomprimierten Audiodaten bzw. der Videodaten durch einen Teilnehmer des Netzwerkers, der zur Wiedergabe auch anderer Audiooder Videodaten anderer Datenquellen vorgesehen ist, ermöglicht werden. Durch diese synergetische Nutzung vorhandener Teilnehmer zur Wiedergabe beispielsweise der Audiodaten in einer nichtkomprimierten Form gelingt es, die Kosten des lokalen Netzwerkes mit seinen verschiedenen Datenquellen und Datensenken erheblich' zu reduzieren. Dabei können eine oder beide Arten der dekomprimierten Daten, also Audio- und auch die Videodaten über die optische Datenleitung zu dem entsprechenden Teilnehmern zur Wiedergabe der Daten geleitet werden. Auch in diesem Fall wird die Effizienz der Datenübertragung im Vergleich zur reinen dekomprimierten Datenübertragung merklich verbessert.

Nach einer besonderen Ausbildung der Erfindung werden in einer ersten Datensenke zuerst mittels einer Trennstufe die gemeinsam übertragenen Audio- und Videodaten voneinander getrennt und erst im folgenden durch jeweils getrennte Bit-Stream-Decoder einzeln decodiert und als dekomprimierte Audiodaten bzw. als dekomprimierte Videodaten mittels entsprechender Ausgabeeinheiten zur Wiedergabe gebracht. Dabei werden die komprimierten Audiodaten und/oder die komprimierten Videodaten der optischen Datenleitung dem lokalen Netzwerk zugeführt und über diese zu einem entsprechenden Teilnehmer, der als zentralisierte Datensenke für die jeweilige komprimierte Datenart wirkt, geleitet. In dieser Datensenke befindet sich der Bit-Stream-Decoder zur Decodierung der empfangenen, komprimierten Daten. Dadurch läßt sich eine Zentralisierung der Bit-Stream-Decoder an dem Ort der Wiedergabe erreichen, wodurch sich die Anzahl an Bit-Stream-Decoder für Audiodaten bzw. für Videodaten für das gesamte lokale Netzwerk reduzieren läßt. Durch diese Ausbildung des erfindunsgemäßen lokalen Netzwerks mit der Übertragung der komprimierten Audiodaten sowie der Übertragung der komprimierten Videodaten läßt sich die maximale Übertragungskapazität in dem ringförmigen Netzwerk optimal ausnutzen.

In dem erfindungsgemäßen lokalen Netzwerk ist eine Steuereinheit vorgesehen, die bevorzugt in einer Datensenke angeordnet ist und die die Übertragung der Daten, sei es der komprimierten Audiodaten, der komprimierten Videodaten, der dekomprimierten Audiodaten und/oder der dekomprimierten Videodaten über die optische Datenleitung des lokalen Netzwerkes zu den entsprechenden anderen Teilnehmern zur Wiedergabe der Daten steuert. Diese Steuereinheit stellt sicher, daß zu jedem Zeitpunkt eine dementsprechende Übertragungskapazität für die Übertragung der Daten über die optische Datenleitung zur Verfügung steht. Diese Steuereinheit gewährleistet die Allokierung der erforderlichen Datenkanäle in dem lokalen Netzwerk.

Eine vorteilhafte Ausbildung der Erfindung zeigt die Möglichkeit, daß mit Hilfe der über die Datenleitung übertragenen Steuerdaten die Datenverbindung zwischen den Datenquellen und den Datensenken gesteuert werden kann. Damit ist ein sicherer Aufbau der Datenverbindungen, die Zuordnung der Datensenke zu den Datenquellen, die Steuerung der Wiedergabe in den Datensenken sowie eine Steuerung der Datendekodierung möglich. Insbesondere hat sich bewährt, mit Hilfe der übertragenen Steuerdaten den Bit-Stream-Decoder zwischen mehreren Decoderfunktionsweisen umzuschalten. Dadurch können durch einen einzigen Bit-Stream-Decoder, der insbesondere im Datenstrom vor der Trennstufe angeordnet ist, mehrere komprimierte Datenformate gelesen und entsprechend der gewählten Decoderfunktion korrekt dekomprimiert werden. Dabei hat es sich bewährt, einen Decoder für die Videodatenkomprimierungsformate, welche typischerweise das MPEG-1-Format, das MPEG-2-Format sowie das JPEG-Format umfassen, wie auch für die Audiodatenkompressionsformate das AC-3, das MPEG-1 und das MPEG-2 vorzusehen. Durch diese Möglichkeit, den Bit-Stream-Decoder zwischen den einzelnen Decodierungsformaten umzuschalten, kann die Anzahl der erforderlichen Bit-Stream-Decoder weiter reduziert werden und dadurch die Kosten des lokalen Netzwerkes weiter gesenkt.

Zwei bevorzugte Ausführungsbeispiele der Erfindung sind in den Zeichnungen dargestellt.
- Fig. 1: zeigt ein beispielhaftes lokales Netzwerk, bei dem der Bit-Stream-Decoder vor der Trennstufe angeordnet ist und
- Fig. 2: zeigt ein beispielhaftes lokales Netzwerk, bei dem die Trennstufe vor den Bit-Stream-Decodern angeordnet ist.

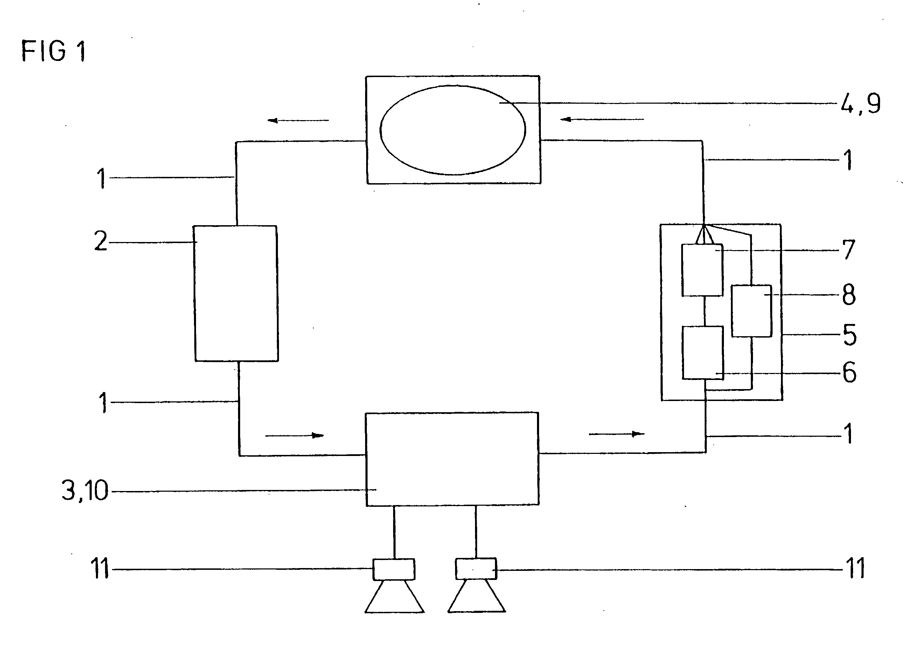

Das in Fig. 1 dargestellte lokale Netzwerk zeigt vier Teilnehmer 2, 3, 4, 5, welche über eine optische Datenleitung 1 miteinander ringförmig verbunden sind. Jeder Teilnehmer 2, 3, 4, 5 zeigt zwei Anschlüsse zu optischen Datenleitungen 1, einer zu einer zuführenden optischen Datenleitung 1 und einer zu einer ableitenden optischen Datenleitung 1. Über die optische Datenleitung 1 werden sowohl Audiodaten, Videodaten wie auch Steuerdaten zwischen den einzelnen Teilnehmern ausgetauscht.

Der Teilnehmer 2 stellt eine Datenquelle 2 für komprimierte Audio- und Videodaten dar. Es handelt sich um einen DVD-Player, der sowohl die Audio- als auch die Videodaten in komprimierter Form abspielt und diese komprimierten Audio- und Videodaten gemeinsam ohne jegliche weitere Bearbeitung im Sinne einer Dekomprimierung an seine ableitende Datenleitung 1 abgibt. Über diese optische Datenleitung 1 werden die gemeinsam übertragenen komprimierten Audio- und Videodaten der Datensenke 5 zugeführt, die die ihr zugeführten Daten einem Bit-Stream-Decoder 6 zuführt. Dieser Bit-Stream-Decoder 6 decodiert und dekomprimiert die Audio- und Videodaten zu dekomprimierten Audiodaten und Videodaten, die anschließend einer Trennstufe 7, welche Teil der Datensenke 5 ist, zugeführt werden. Diese Trennstufe 7 trennt die gemeinsam decodierten Audio- und Videodaten nach ihrer Art auf und gibt diese an die optische Datenleitung 1 zur Weiterleitung an die anderen Datensenken 3, 4 weiter. Dabei zeigt die Datensenke 5 eine Steuereinheit 8, welche die Steuerung der Übertragung der voneinander getrennten dekomprimierten Datentypen, also Audiodaten und Videodaten, über die optische Datenleitung 1 von der Datensenke 5 zu den anderen Datensenken 3, 4 ermöglicht. Diese Steuereinheit 8 stellt dabei die Zuordnung der voneinander getrennten dekomprimierten Datenarten zu einzelnen Datenkanälen in der einen einzigen optischen Datenleitung 1 sicher.

Die getrennt übertragenen Audiodaten und Videodaten, welche in Datenstromrichtung nach der Datensenke 5 in dekomprimierter Form vorliegen, werden der Datensenke 4 zugeführt, welche einen Bildschirm 9 aufweist. Die dekomprimierten zugführten Videodaten werden in der Datensenke 4 zu einem elektrischen FBAS-Signal aufbereitet, das zur Ansteuerung der Bildröhre 9 verwendet wird. Mit Hilfe dieses Videosignals wird eine optische Wiedergabe der Videosignale ermöglicht.

Die dekomprimierten Audiodaten werden über die Datensenke 4, die Datenquelle 2 bis zu der Datensenke 3, 10 weitergeleitet, wo die dekomprimierten Audiodaten aufbereitet, verstärkt und durch die angeschlossenen Ausgabeeinheiten in Form von Lautsprechern 11 zur akkustischen Wiedergabe gebracht werden. Die Bearbeitung der über die Datenleitung 1 zugeführten Audiosignale umfaßt auch eine digitalisierte Signalaufbereitung, insbesondere durch Equalising, Fiding, Delayline und ähnliches.

Dieses lokale Netzwerk gemäß Fig. 1 zeigt eine sehr kostengünstige Datenquelle 2, die keinen Bit-Stream-Decoder zeigt und die generierten Audio- und Videodaten in komprimierter Form an die Datenleitung 1 gibt. Durch diese Beaufschlagung des Netzwerkes mit komprimierten Daten durch die Datenquelle 2 ist eine effiziente Nutzung der Übertragungskapazität des Netzwerkes gegeben. Weiterhin zeigt das lokale Netzwerk einen einzigen Bit-Stream-Decoder 6 in einer zentralen Datensenke 3, durch den die ihm von der Datenquelle 2 gemeinsam zugeführten komprimierten Audio- und Videodaten decodiert und als dekompriemierte Daten über die optische Datenleitung 1 in die entsprechenden Ausgabeeinheiten 9, 11 zur Wiedergabe gebracht werden. Durch die Verwendung eines einzigen Bit-Stream-Decoders 6 für das lokale Netzwerk ist eine sehr kostengünstige Ausbildung eines lokalen Netzwerkes gegeben.

Der Bit-Stream-Decoder 6 ist in der Lage dekomprimierte Audiodaten und dekomprimierte Videodaten gemeinsam und zeitgleich entsprechend dem jeweiligen Kompressionsformat zu decodieren und diese decodierten, dekomprimierten Audio- und Videodaten der Trennstufe 7 zur Trennung dieser dekomprimierten Daten in eigenständige Datenströme für Audiodaten und Videodaten aufzuteilen. Durch diese Zentralisierung und erweist sich dieses lokale Netzwerk trotz der erhöhten Ansprüche an die Mächtigkeit der Bit-Stream-Decoders 6 als sehr kostengünstig. Dies umso mehr, wenn neben der einen Datenquelle 2 und der einen Datensenke für Audiodaten 3 und der einen Datensenke für Videodaten 4 mehrere dieser Datenquellen bzw. Datensenken vorhanden sind, die allesamt durch die besondere Ausbildung des lokalen Netzwerkes mit der Datensenke 5 mit zentralem Bit-Stream-Decoder 6 ohne eigenen Bit-Stream-Decoder ausgebildet sein können.

Durch die besondere Ausbildung des Netzwerkes mit einer ringförmigen Topologie mit einer einzigen optischen Datenleitung 1 gelingt es zudem ein unerwünschtes Einstrahlen von Störung in die Datenleitung zu verhindern, was insbesondere für den automobilen Einsatz des lokalen Netzwerkes von besonderem Interesse ist. Dadurch ist die elektromagnetische Verträglichkeit des lokalen Netzwerkes in besonderem Maße gegeben.

Durch die ringförmige Topologie gelingt es, auf Knoten des Netzwerkes zu verzichten, was die maximale Übertraungskapazität der optischen Datenleitung respektive des ringförmigen Netzwerkes sehr gut nutzbar macht. Damit ist ein lokales Netzwerk gegeben, das nicht nur kostengünstig ist, sondern auch eine besonders effiziente Ausnutzung der maximalen Übertragungskapazität des Netzwerkes zeigt.

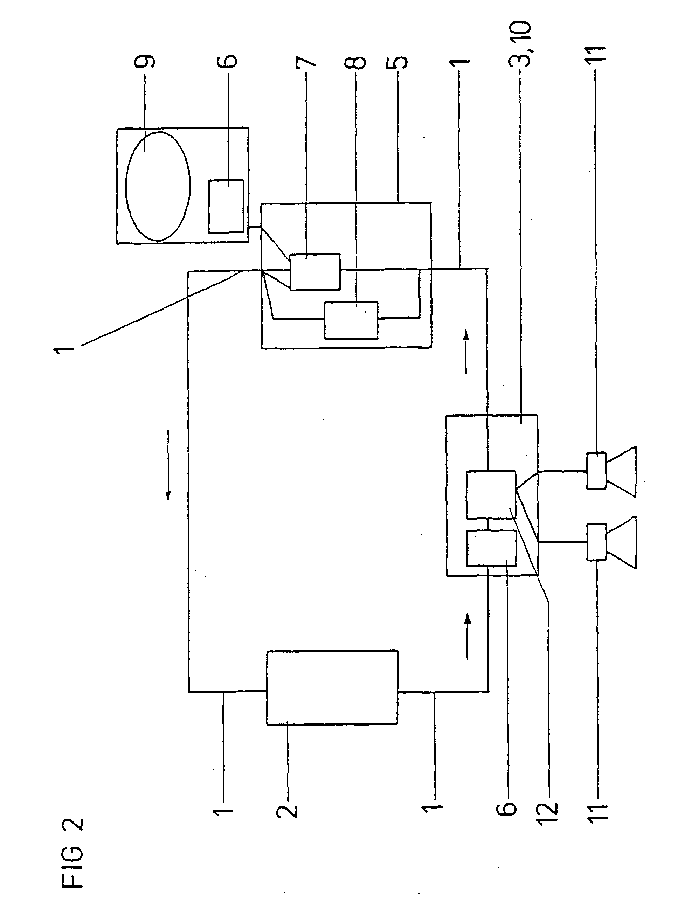

Die zweite bevorzugte Ausführungsform des lokalen Netzwerkes gemäß Fig. 2 zeigt drei Teilnehmer 2, 3, 5, welche über die ringförmige optische Datenleitung 1 miteinander verbunden sind. Die Datenquelle 2 entspricht der Datenquelle 2, wie sie in Fig. 1 dargestellt ist. Sie generiert komprimierte Audiound Videodaten und gibt sie über die optische Datenleitung 1, über die Datensenke 3 an die Datensenke 5, die diese komprimierten Audio- und Videodaten mittels der Trennstufe 7 in komprimierte Audiodaten und in komprimierte Videodaten aufteilt. Mittels der Steuereinheit 8 wird eine Allokierung der Datenkanäle in der optischen Datenleitung 1 des lokalen Netzwerks für die Übertragung der komprimierten Audiodaten zu der Datensenke 3, 10 vorgenommen. Weiterhin werden die komprimierten Videodaten über eine Datenleitung zu der Ausgabeeinheit 9 für die Videodaten geleitet.

Diese Ausgabeeinheit 9 zeigt einen Bit-Stream-Decoder 6, der die komprimierten Videodaten in ein dekomprimiertes Videosignal, hier ein elektrisches RGB-Signal wandeln, das auf dem Display der Ausgabeeinheit 9 zur Wiedergabe gebracht wird.

Auch die Datensenke 3, 10 für die komprimierten Audiodaten zeigt einen Bit-Stream-Decoder 6, der hier als AC-3-Decoder ausgebildet ist. Dieser AC-3-Decoder decodiert die komprimierten Audiodaten und führt sie einer Bearbeitungs- und Verstärkerstufe 12 zu, die wiederum die bearbeiteten und verstärkten Audiosignale den Lautsprechern 11 zuführt. Diese wandeln das elektrische Audiosignal von der Bearbeitungs- und Verstärkerstufe 12 in ein akustisches Audiosignal um.

Diese erfindungsgemäße Ausbildung des lokalen Netzwerks mit einer Trennstufe 7 im komprimierten Datenstrom vor den jeweiligen ihr zugeordneten Bit-Stream-Decoder 6 ermöglicht eine optimierte Nutzung der maximalen Übertragungskapazität des lokalen Netzwerkes. Auf den optischen Datenleitungen 1 werden zwischen den einzelnen Teilnehmern 2, 3, 5 ausschließlich komprimierte Audio- bzw. Videodaten übertragen. Zwar zeigt diese Ausbildung eine Mehrzahl von Bit-Stream-Decodern 6, die aber sehr spezifisch nur als Audio-Bit-Stream-Decoder zur Decodierung der komprimierten Audiodaten bzw. nur als Video-Bit-Stream-Decoder zur Decodierung der komprimierten Videodaten ausgebildet sind. Durch diese spezifische Anforderung ist es möglich trotz der erhöhten Anzahl an Bit-Stream-Decodern 6 die Kosten des lokalen Netzwerkes unter Berücksichtigung der optimierten Effizienz bei der Ausnutzung der maximalen Übertragungskapazität des Netzwerkes gering zu halten.

### Bezugszeichenliste

- 1: optische Datenleitung
- 2: Datenquelle
- 3: Datensenke für die übertragenen Audiodaten
- 4: Datensenke für die übertragenen Videodaten
- 5: Datensenke
- 6: Bit-Stream-Decoder
- 7: Trennstufe
- 8: Steuereinheit
- 9: Ausgabeeinheit für Videodaten
- 10: Datensenke
- 11: Lautsprecher
- 12: Bearbeitungs- und Verstärkungseinheit für Audiosignale

## Patentansprüche

1. Lokales Netzwerk mit mehreren Teilnehmern, die mittels einer optischen Datenleitung (1) zur Übertragung von Audiound/oder Videodaten sowie von Steuerdaten zu einem ringförmigen Netzwerk verbunden sind,
mit wenigstens einem Teilnehmer (2), der eine Datenquelle (2) für komprimierte Audio- und Videodaten darstellt,
mit wenigstens einem Teilnehmer (3) der eine Datensenke (3) für übertragene Audiodaten darstellt,
und mit wenigstens einem weiteren Teilnehmer (4) der eine Datensenke (4) für die übertragenen Videodaten darstellt,
**gekennzeichnet durch** wenigstens eine Datensenke (5), die mit einem ihr zugeordneten Bit-Stream-Decoder (6) zur Decodierung der zugeführten Audio- und Videodaten, mit einer Trennstufe (7) zur Trennung der gemeinsam übertragenen Audio- von den Videodaten und mit einer Steuereinheit (8) versehen ist, die geeignet ist, eine Art der übertragenen Daten einer dieser Datensenke (5) zugeordneten Ausgabeeinheit (9) zur Wiedergabe zuzuführen und die andere Art der Daten über die optische Datenleitung (1) einer anderen Datensenke (10) zuzuführen, die geeignet ist, die ihr zugeführten Daten einer ihr zugeordneten Ausgabeeinheit (11) zur Wiedergabe zuführen.

2. Lokales Netzwerk nach Anspruch 1, **dadurch gekennzeichnet, daß** der Bit-Stream-Decoder (6) im Datenstrom der komprimierten Audio- und Videodaten vor der Trennstufe (7) angeordnet ist.

3. Lokales Netzwerk nach Anspruch 2, **dadurch gekennzeichnet, daß** mehrere andere Datensenken vorgesehen sind, die keine Bit-Stream-Decoder aufweisen und die geeignet sind, die durch den Bit-Stream-Decoder der Datensenke (5) decodierten ihnen zugeführten Daten den ihnen zugeordneten Ausgabeeinheiten zuführen.

4. Lokales Netzwerk nach einem der vorstehenden Ansprüche, **dadurch gekennzeichnet, daß** die Datensenke (5) mit Bit-Stream-Decoder (6) von den anderen Datensenken (3, 4, 10) getrennt und über eine optische Datenleitung verbunden ausgebildet sind.

5. Lokales Netzwerk nach Anspruch 1 und 4, **dadurch gekennzeichnet, daß** die Datensenke (5) mit der ihr zugeordneten Ausgabeeinheit (9) zur Wiedergabe einer Art der Daten über eine gemeinsame optische Datenleitung (1) zur Übertragung der Audio- wie der Videodaten verbunden ist.

6. Lokales Netzwerk nach Anspruch 1, **dadurch gekennzeichnet, daß** der der Datensenke (5) zugeordnete Bit-Stream-Decoder (6) im Datenstrom der komprimierten Audio- und Videodaten nach der Trennstufe (7) der Datensenke (5) angeordnet ist und wenigstens ein weiterer Bit-Stream-Decoder (6) in den anderen Datensenken (3, 4, 10) zur Decodierung der abgetrennten und über die optischen Datenleitung übertragenen Daten vorgesehen sind.

7. Lokales Netzwerk nach einem der vorstehenden Ansprüche, **dadurch gekennzeichnet, daß** der Bit-Stream-Decoder (6) ein MPEG-1-Decoder, ein MPEG-2-Decoder, ein AC-3-Decoder und/oder ein JPEG-Decoder ist.

8. Lokales Netzwerk nach einem der vorstehenden Ansprüche, **dadurch gekennzeichnet, daß** der Bit-Stream-Decoder (6) mittels übertragener Steuerdaten als MPEG-1-Decoder, als MPEG-2-Decoder, als AC-3-Decoder oder als JPEG-Decoder schaltbar ist.

9. Verfahren zur Wiedergabe von Audio- und Videodaten in einem lokalen Netzwerk nach Anspruch 1, wobei komprimierte Audio- und Videodaten einer Datenquelle (2) über die optische Datenleitung (1) einer Datensenke (5) zugeführt werden, in dieser Datensenke (5) die komprimierten Audio- und Videodaten mittels des Bit-Stream-Decoders (6) decodiert und anschließend mittels einer Trennstufe (7) nach Audiodaten und Videodaten getrennt werden und diese getrennten Daten den voneinander getrennten Ausgabeeinheiten (9, 11) für Audiodaten bzw. Videodaten zugeführt und wiedergegeben werden, **dadurch gekennzeichnet, daß** zumindest eine Art der decodierten Daten über die optische Datenleitung (1) übertragen wird.

10. Verfahren zur Wiedergabe von Audio- und Videodaten in einem lokalen Netzwerk nach Anspruch 6 wobei komprimierte Audio- und Videodaten einer Datenquelle (2) über die optische Datenleitung (1) einer Datensenke (5) zugeführt werden, in dieser die komprimierten Audio- und Videodaten mittels einer Trennstufe (7) getrennt werden und diese getrennten komprimierten Daten an verschiedene Bit-Stream-Decoder (6) in verschiedenen Datensenken (5, 3, 10) zugeführt, decodiert und anschließend zur Wiedergabe gebracht werden, **dadurch gekennzeichnet**, daβ zumindest eine Art der getrennten komprimierten Daten über die optische Datenleitung (1) übertragen wird.

## Claims

1. A local network with a plurality of participants, which are connected together by means of an optical data line (1) for transmitting audio and/or video data and control data to form a ring network, including
at least one participant (2), which constitutes a data source (2) for compressed audio and video data,
at least one participant (3), which constitutes a data sink (3) for transmitted audio data,
and at least one further participant (4), which constitutes a data sink (4) for the transmitted video data,
**characterised by** at least one data sink (5), which is provided with a bit-stream decoder (6) associated with it for decoding the supplied audio and video data, a buffer stage (7) for separating the audio and video data transmitted together and a control unit (8), which is suitable for supplying one type of the transmitted data to an output unit (9) associated with one of these data sinks (5) for reproduction and to supply the other type of data via the optical data line (1) to another data sink (10), which is adapted to supply the data supplied to it to an output unit (11) associated with it for reproduction.

2. A local network as claimed in Claim 1, **characterised in that** the bit-stream decoder (6) is disposed in the data stream of the compressed audio and video data before the buffer stage (7).

3. A local network as claimed in Claim 2, **characterised in that** a plurality of other data sinks are provided, which have no bit-stream decoder and which are adapted to supply the data supplied to them and decoded by the bit-stream decoder of the data sink (5) to the output units associated with them.

4. A local network as claimed in one of the preceding Claims, **characterised in that** the data sink (5) with bit-stream decoder (6) is isolated from the other data sinks (3, 4, 10) and connected to them by means of an optical data line.

5. A local network as claimed in Claims 1 and 4, **characterised in that** the data sink (5) is connected to the output unit (9) associated with it for reproducing one type of the data by means of a common optical data line (1) for transmitting the audio and the video data.

6. A local network as claimed in Claim 1, **characterised in that** the bit-stream decoder (6) associated with the data sink (5) is arranged in the data flow of the compressed audio and video data after the buffer stage (7) of the data sink (5) and at least one further bit-stream decoder (6) is provided in the other data sinks (3, 4, 10) for decoding the data which is separated and transmitted via the optical data line.

7. A local network as claimed in one of the preceding Claims, **characterised in that** the bit-stream decoder (6) is an MPEG-1 decoder, and MPEG-2 decoder, an AC-3 decoder and/or a JPEG decoder.

8. A local network as claimed in one of the preceding Claims, **characterised in that** the bit-stream decoder (6) is switchable by means of transmitted control data to act as an MPEG-1 decoder, an MPEG-2 decoder, an AC-3 decoder or a JPEG decoder.

9. A method for reproducing audio and video data in a local network as claimed in Claim 1, wherein compressed audio and video data from a data source (2) is supplied via the optical data line (1) to a data sink (5), the compressed audio and video data is decoded in this data sink (5) by means of the bit-stream decoder (6) and subsequently separated by means of a buffer stage (7) into audio data and video data and this separated data is supplied to the output units (9, 11), separated from one another, for audio data and video data, respectively, and reproduced, **characterised in that** at least one type of the decoded data is transmitted via the optical data line (1).

10. A method of reproducing audio and video data in a local network as claimed in Claim 6, wherein compressed audio and video data from a data source (2) is supplied via the optical data line (1) to a data sink (5), the compressed audio and video data are separated in it by means of a buffer stage (7) and this separated, compressed data is supplied to different bit-stream decoders (6) in different data sinks (5, 3, 10), decoded and then reproduced, **characterised in that** at least one type of the separated, compressed data is transmitted via the optical data line (1).

## Revendications

1. Réseau local ayant plusieurs postes, qui sont reliés à un réseau annulaire par l'intermédiaire d'une ligne de données optique (1) pour la transmission de données audio et/ou vidéo ainsi que de données de commande,
au moins un poste (2) formant une source de données (2) pour des données audio et vidéo comprimées,
au moins un poste (3) formant un récepteur de données (3) pour des données audio transmises, et
au moins un autre poste (4) formant un récepteur de données (4) pour les données vidéo transmises,
**caractérisé par** au moins un récepteur de données (5) qui est pourvu d'un décodeur de flux de bits (6) qui lui est associé pour décoder les données audio et vidéo acheminées, d'un étage séparateur (7) pour séparer les données audio des données vidéo transmises ensemble et d'une unité de commande (8), qui est adaptée à acheminer un type de données transmises à une unité de sortie (9) associée à ce récepteur de données (5) pour une reproduction et à acheminer l'autre type de données à travers la ligne de données optiques (1) à un autre récepteur de données (10) qui est adapté à acheminer les données qui lui ont été acheminées à une unité de sortie associée (11) pour une reproduction.

2. Réseau local selon la revendication 1, **caractérisé en ce que** le décodeur de flux de bits (6) est disposé dans le flux de données des données audio et vidéo comprimées avant l'étage séparateur (7).

3. Réseau local selon la revendication 2, **caractérisé en ce que** plusieurs autres récepteurs de données sont prévus, qui ne présentent aucun décodeur de flux de bits, et qui sont adaptés à acheminer les données décodées par le décodeur de flux de bits du récepteur de données (5) qui lui ont été acheminées aux unités de sortie associées.

4. Réseau local selon l'une des revendications précédentes, **caractérisé en ce que** le récepteur de données (5) avec décodeur de flux de bits (6) est séparé des autres récepteurs de données (3, 4, 10) et est relié à ceux-ci par une ligne de données optique.

5. Réseau local selon les revendications 1 et 4, **caractérisé en ce que** le récepteur de données (5) est relié à l'unité de sortie associée (9) pour la reproduction d'un type de données à travers une ligne de données optique commune (1) pour la transmission des données audio et vidéo.

6. Réseau local selon la revendication 1, **caractérisé en ce que** le décodeur de flux de bits (6) associé au récepteur de données (5) est disposé dans le flux de données des données audio et vidéo comprimées après l'étage séparateur (7) du récepteur de données (5) et **en ce qu'**au moins un autre décodeur de flux de bits (6) est prévu dans les autres récepteurs de données (3, 4, 10) pour décoder les données séparées et transmises par la ligne de données optique.

7. Réseau local selon l'une des revendications précédentes, **caractérisé en ce que** le décodeur de flux de bits (6) est un décodeur MPEG-1, un décodeur MPEG-2, un décodeur AC-3 et/ou un décodeur JPEG.

8. Réseau local selon l'une des revendications précédentes, **caractérisé en ce que** le décodeur de flux de bits (6) est connectable, au moyen de données de commande transmises, en tant que un décodeur MPEG-1, décodeur MPEG-2, décodeur AC-3 ou décodeur JPEG.

9. Procédé pour la reproduction de données audio et vidéo dans un réseau local selon la revendication 1, dans lequel des données audio et vidéo comprimées d'une source de données (2) sont acheminées par une ligne de données optique (1) à un récepteur de données (5), dans lequel les données audio et vidéo comprimées sont décodées au moyen du décodeur de flux de bits (6) et sont ensuite séparées au moyen d'un étage séparateur (7) en données audio et en données vidéo et ces données séparées sont acheminées vers des unités de sortie séparées (9, 11) pour des données audio respectivement des données vidéo et sont reproduites, **caractérisé en ce qu'**au moins un type de données décodées est transmis par la ligne de données optique (1).

10. Procédé pour la reproduction de données audio et vidéo dans un réseau local selon la revendication 6, dans lequel des données audio et vidéo comprimées d'une source de données (2) sont acheminées par la ligne de données optique (1) à un récepteur de données (5), les données audio et vidéo comprimées étant séparées dans ce récepteur au moyen d'un étage séparateur (7) et ces données comprimées séparées sont acheminées vers différents décodeurs de flux de bits (6), dans différents récepteurs de données (5, 3, 10), et y sont décodées et ensuite reproduites, **caractérisé en ce qu'**au moins un type de données séparées comprimées est transmis par la ligne de données optique (1).
